# EUROPÄISCHE PATENTANMELDUNG

(11) **EP 4 400 887 A1**
(43) Veröffentlichungstag der Anmeldung: **17.07.2024**
(21) Anmeldenummer: 23151385.4
(22) Anmeldetag: 12.01.2023
(51) Int. Cl.: G02B 6/44

(54) **KABELABLAGEVORRICHTUNG UND VERFAHREN ZUR MONTAGE EINES FASEROPTISCHEN VERTEILERSYSTEMS**

(71) Anmelder: Rosenberger-OSI GmbH & Co. OHG, 86167 Augsburg (DE)
(72) Erfinder: Mayr, Harald, 86735 Amerdingen (DE); Jäger, Stephanie, 86167 Augsburg (DE); Heimer, Danny, 83714 Miesbach (DE); Brücher, Luis, 13465 Berlin (DE); Weigand, Benjamin, 86150 Augsburg (DE)
(74) Vertreter: Lorenz, Matthias

(57) **Zusammenfassung**

Die Erfindung betrifft eine Kabelablagevorrichtung (5) zur Ablage, Befestigung und/oder Führung von Kabeln (7) eines faseroptischen Verteilersystems (1), zur Verwendung mit einer separaten Trägeranordnung (4) für eine faseroptische Komponente. Es ist vorgesehen, dass die Kabelablagevorrichtung (5) einen Kabelablageabschnitt (6) und zwei an verschiedenen Seiten des Kabelablageabschnittes (6) angeordnete Montageabschnitte (10) zur Befestigung an einem separaten faseroptischen Verteilerrahmen (2) aufweist.

## Beschreibung

Die Erfindung betrifft eine Kabelablagevorrichtung zur Ablage, Befestigung und/oder Führung von Kabeln eines faseroptischen Verteilersystems.

Die Erfindung betrifft außerdem ein Trägersystem, aufweisend eine Kabelablagevorrichtung und wenigstens eine Trägeranordnung mit einer Trägereinheit für faseroptische Komponenten.

Die Erfindung betrifft ferner ein faseroptisches Verteilersystem, aufweisend wenigstens eine Kabelablagevorrichtung und einen faseroptischen Verteilerrahmen.

Die Erfindung betrifft weiter ein Verfahren zur Montage eines faseroptischen Verteilersystems.

In Rechenzentren werden mitunter Trägereinheiten, insbesondere einzelne Einschubfächer ("Trays") bis hin zu so genannten Rangierfeldern (auch "Patchfelder" oder "Patchpanels" genannt) zum Herstellen und Verteilen von Datenverbindungen, beispielsweise über Netzwerkkabel, Telefonkabel oder Glasfaserkabel, verwendet. Ein solches Rangierfeld umfasst in der Regel zumindest eine Schnittstelle ("Interface") mit einer bestimmten Anzahl einzelner oder in Modulen bzw. Kassetten gruppierter Anschlüsse bzw. Steckverbinder. In der Praxis sind häufig mehrere Rangierfelder in einem gemeinsamen Verteilerrahmen (auch "Rack" genannt) in verschiedenen Höhenebenen installiert.

Aus Gründen der Zugänglichkeit der Schnittstellen des Rangierfeldes sind die Rangierfelder bzw. Trays von dem Servicetechniker häufig aus dem Verteilerrahmen bedarfsweise ausziehbar und hierfür zusammen mit einem entsprechend ausgestalteten Trägergehäuse ("Chassis") in dem Verteilerrahmen befestigt, wie beispielsweise in der US 2022/0236510 A1 beschrieben. Das Trägergehäuse ist starr an dem Verteilerrahmen montiert und weist geeignete Linearauszüge für die Einschubfächer bzw. Trays auf. Um die Anschlussdichte weiter zu erhöhen, werden in der Regel mehrere Rangierfelder in einem gemeinsamen Trägergehäuse angeordnet.

An der von dem Interface des Rangierfeldes abgewandten Rückseite sind in der Regel verschiedene Kabel mit mehreren optischen Fasern (sogenannte "Trunk-Kabel") direkt (beispielsweise im Spleißverfahren) oder über eine oder mehrere Steckverbindung(en) angeschlossen. Diese Kabel werden mit anderen optischen Steckverbindern innerhalb desselben Verteilerrahmens oder in anderen Verteilerrahmen weiterverbunden. Die Trunk-Kabel sind üblicherweise im hinteren Bereich des Rangierfeldes bzw. der Trägereinheit geführt und fixiert. Das Verlegen der Trunk-Kabel ist für den Servicetechniker zeitaufwendig, fehleranfällig und in der Regel unkomfortabel. Dies ist insbesondere darin begründet, dass die Zugänglichkeit zu den Kabelablageabschnitten der Trägereinheiten ausgehend von dem Interface, also ausgehend von der Vorderseite des Verteilerrahmens, wenn überhaupt, nur eingeschränkt möglich ist. Die Verkabelung kann mitunter nur von der Rückseite des Verteilerrahmens erfolgen. Aufgrund in der Regel beschränkter räumlicher Gegebenheiten am Aufstellort der Verteilersysteme ist auch diese Zugangsmöglichkeit zumeist beschränkt.

Insbesondere nach der Montage der einzelnen Trägereinheiten ist die Zugänglichkeit in den Innenraum des Verteilerrahmens von der Vorderseite meist nicht mehr möglich. Aus diesem Grund werden die Trunk-Kabel in der Praxis im Rahmen eines mehrstufigen Prozesses verlegt, wonach zunächst einzelne Kabel provisorisch im Innenraum des Verteilerrahmens fixiert und erst später zu den jeweiligen Kabelablageabschnitten der Trägereinheiten weiterverlegt werden.

Ein weiteres Problem bei der Montage eines faseroptischen Verteilersystems besteht bei der Montage der Trägereinheiten in dem Verteilerrahmen. Für die Montage einer Trägereinheit in dem Verteilergehäuse werden gemäß der derzeitigen Praxis in der entsprechend vorgesehenen Höhenebene zunächst Käfigmuttern in hierfür vorgesehene Stanzlöcher der Montagestreben bzw. "Rackstützen" des Verteilerrahmens eingesetzt. Nach dem Einsetzen der Käfigmuttern kann der Servicetechniker die Trägereinheit ausgehend von der Vorderseite des Verteilerrahmens mit einer zusätzlichen Schraube in die Gewindebohrungen der Käfigmuttern einschrauben. Auch dieser Prozess ist aufwändig und das Einsetzen der Käfigmuttern birgt außerdem ein nicht unerhebliches Verletzungsrisiko für den Servicetechniker.

In Anbetracht des bekannten Stands der Technik besteht die Aufgabe der vorliegenden Erfindung darin, eine Kabelablagevorrichtung bereitzustellen, die eine einfache und komfortable Ablage, Befestigung und/oder Führung von Kabeln eines faseroptischen Verteilersystems ermöglicht, insbesondere bei guter Zugänglichkeit für einen Servicetechniker und verminderter Montagedauer.

Der vorliegenden Erfindung liegt auch die Aufgabe zugrunde, ein Trägersystem und ein faseroptisches Verteilersystem bereitzustellen, bei dem eine sichere und komfortable Ablage, Befestigung und/oder Führung von Kabeln eines faseroptischen Verteilersystems möglich ist, insbesondere bei guter Zugänglichkeit für einen Servicetechniker und verminderter Montagedauer.

Außerdem ist es Aufgabe der Erfindung, ein Verfahren zur Montage eines faseroptischen Verteilersystems bereitzustellen, in dessen Rahmen eine sichere und komfortable Ablage, Befestigung und/oder Führung von Kabeln eines faseroptischen Verteilersystems erfolgen kann, insbesondere bei guter Zugänglichkeit für einen Servicetechniker und verminderter Montagedauer.

Die Aufgabe wird für die Kabelablagevorrichtung mit den in Anspruch 1 aufgeführten Merkmalen gelöst. Hinsichtlich des Trägersystems wird die Aufgabe durch die Merkmale des Anspruchs 9 und betreffend das faseroptische Verteilersystem durch Anspruch 11 gelöst. Für das Verfahren wird die Aufgabe durch Anspruch 14 gelöst.

Die abhängigen Ansprüche und die nachfolgend beschriebenen Merkmale betreffen vorteilhafte Ausführungsformen und Varianten der Erfindung.

Es ist eine Kabelablagevorrichtung zur Ablage, Befestigung und/oder Führung von Kabeln (insbesondere "Trunks" bzw. Trunk-Kabeln) eines faseroptischen Verteilersystems vorgesehen.

Gattungsgemäße Kabelablagevorrichtung werden in der faseroptischen Verteilertechnik mitunter auch als "Trunkhalterungen" bezeichnet.

Erfindungsgemäß ist die Kabelablagevorrichtung zur Verwendung mit einer separaten Trägeranordnung für eine faseroptische Komponente ausgebildet. Die Kabelablagevorrichtung weist einen Kabelablageabschnitt und zwei an verschiedenen Seiten des Kabelablageabschnittes (insbesondere an gegenüberliegenden Seiten, beispielsweise an der rechten und linken oder an der vorderen und hinteren Seite) angeordnete Montageabschnitte zur Befestigung an einem separaten faseroptischen Verteilerrahmen auf.

Gemäß dem vorbekannten Stand der Technik sind Kabelablagevorrichtungen bzw. Trunkhalterungen jeweils Bestandteil einer Trägeranordnung und hierzu in der Regel auf der Rückseite des Trägergehäuses oder der Trägereinheit angeordnet. Hingegen ist es ein besonderer Vorteil der Erfindung, die Kabelablagevorrichtung separat von einer Trägeranordnung auszubilden. Auf diese Weise ist es vorteilhaft möglich, die Kabelablagevorrichtung gänzlich unabhängig von der Trägeranordnung in dem Verteilerrahmen zu montieren.

Dadurch, dass die vorgeschlagene Kabelablagevorrichtung unabhängig von einer Trägeranordnung montierbar ist, kann der Servicetechniker die Kabelablagevorrichtung anschließend komfortabel bestücken, bevor der Verteilerrahmen mit den Trägeranordnungen bestückt wird. Die Bestückung mit den Trunk-Kabeln muss daher auch nicht erst provisorisch erfolgen, wie gemäß der gängigen Praxis im Stand der Technik. Die Kabel können also bereits in ihren Endpositionen auf dem Kabelablageabschnitt angeordnet und fixiert werden. Der Arbeitsschritt der provisorischen Vormontage wird eingespart und aufgrund des einfacheren Zugriffs auf die Kabelablagevorrichtung wird eine komfortablere Handhabung für den Servicetechniker gewährleistet. Hierdurch wird auch die Fehleranfälligkeit vermindert.

Es kann vorgesehen sein, dass eine der vorgeschlagenen Kabelablagevorrichtungen genau einer oder mehreren Trägeranordnungen innerhalb des Verteilerrahmens zugeordnet wird. In der Regel kann es von Vorteil sein, jeder Kabelablagevorrichtung genau eine Trägeranordnung zuzuordnen. Die der Kabelablagevorrichtung zugeordnete(n) Trägeranordnung(en) kann bzw. können vorzugsweise auf derselben Höhenebene in dem Verteilerrahmen montierbar sein, wie die Kabelablagevorrichtung.

Die Trägeranordnung kann insbesondere so montiert werden, dass sich die Kabelablagevorrichtung (insbesondere der Kabelablageabschnitt) während der Verwendung des Verteilersystems (d. h. im fertig montierten Zustand) auf der Rückseite bzw. auf der von dem Interface der Trägeranordnung abgewandten Seite in dem Verteilerrahmen befindet.

Die Trägeranordnung kann in dem Verteilerrahmen grundsätzlich auf beliebige Weise montierbar sein - sogar gänzlich unabhängig von der Kabelablagevorrichtung. Vorzugsweise ist allerdings zumindest eine der Trägeranordnungen mit der Kabelablagevorrichtung unmittelbar verbindbar bzw. mit der Kabelablagevorrichtung unmittelbar verbunden, beispielsweise verschraubt (wie dies nachfolgend noch vorgeschlagen wird).

Die Montageabschnitte sind vorzugsweise zur unmittelbaren Befestigung an dem Verteilerrahmen und/oder an der Trägeranordnung vorgesehen. An dieser Stelle sei erwähnt, dass grundsätzlich auch noch weitere Montageabschnitte vorgesehen sein können, beispielsweise insgesamt drei Montageabschnitte, vier Montageabschnitte, fünf Montageabschnitte, sechs Montageabschnitte oder noch mehr Montageabschnitte. Die Verwendung von genau zwei Montageabschnitten hat sich allerdings als besonders geeignet und in der Regel ausreichend herausgestellt, um eine ausreichend stabile Fixierung zu ermöglichen.

Der Kabelablageabschnitt kann zur formschlüssigen, kraftschlüssigen und gegebenenfalls auch stoffschlüssigen Verbindung mit den Kabeln ausgebildet sein.

Bei dem Kabelablageabschnitt handelt es sich vorzugsweise um einen vornehmlich flachen Abschnitt der Kabelablagevorrichtung, insbesondere um eine Auflagefläche für die Kabel. Bei dem Kabelablageabschnitt handelt es sich vorzugsweise um zumindest ein vornehmlich flaches Blechteil. Der Kabelablageabschnitt kann sich gegebenenfalls auch über mehrere Höhenebenen erstrecken, also beispielsweise einen Stapel mehrerer Auflageflächen aufweisen (z. B. in der Art von Einschubfächern).

In einer vorteilhaften Weiterbildung der Erfindung kann vorgesehen sein, dass der Kabelablageabschnitt wenigstens eine mechanische Aufnahmeschnittstelle für wenigstens eines der Kabel und/oder für wenigstens einen Kabelkopf eines der Kabel aufweist.

Die mechanischen Aufnahmeschnittstelle kann eine Montageposition für das Kabel bzw. für den Kabelkopf auf dem Kabelablageabschnitt ausbilden. Vorzugsweise sind mehrere mechanische Aufnahmeschnittstellen über den Kabelablageabschnitt verteilt angeordnet, insbesondere in einem gleichmäßigen Raster bzw. in gleichmäßiger Beabstandung.

Die Aufnahmeschnittstellen können zur Aufnahme eines oder mehrerer Kabel bzw. zur Aufnahme eines oder mehrerer Kabelköpfe ausgebildet sein.

Unter einem "Kabelkopf" ist in der Regel ein Endabschnitt des Kabels zu verstehen, in dem eine Aufteilung der gebündelten Leitung in mehrerer Einzelleitungen bzw. optische Faser erfolgt. Bei dem Kabelkopf kann es sich insbesondere um einen sogenannten "Trunk-Kopf", gegebenenfalls aber auch um einen herkömmlichen Steckverbinder oder einen sonstigen Verbinder, handeln.

Die Aufnahmeschnittstelle kann beispielsweise eine oder mehrere Ausnehmungen zur Durchführung von Befestigungselementen (zum Beispiel Verzurrelementen, wie Kabelbinder oder Kabelschellen) und/oder eines oder mehrere Rastelemente aufweisen. Die Aufnahmeschnittstellen können auch Stege, Stifte, Kabelkanäle oder sonstige Mittel aufweisen, die der Aufnahme, Befestigung und/oder Führung eines Kabels oder Kabelkopfes dienen.

Gemäß einer Weiterbildung der Erfindung kann vorgesehen sein, dass die Kabelablagevorrichtung über die Montageabschnitte an der Trägeranordnung befestigbar ist, insbesondere unmittelbar an der Trägeranordnung befestigbar ist.

Dadurch, dass die Montage der Trägeranordnung an denselben Montageabschnitten erfolgen kann, die auch bereits zur Montage der Kabelablagevorrichtung an dem Verteilerrahmen dienen, kann eine technisch besonders effiziente Montagelösung bereitgestellt werden. Auch ist die Montage der Trägeranordnung auf derselben Höhenebene wie die Kabelablagevorrichtung auf diese Weise besonders einfach und präzise durchführbar. Die Montage der Trägeranordnung an den Montageabschnitten der Kabelablagevorrichtung kann der Kabelablagevorrichtung außerdem zusätzliche mechanische Stabilität verleihen.

Gemäß einer Weiterbildung der Erfindung kann vorgesehen sein, dass die Kabelablagevorrichtung bereits einzig unter Verwendung der Montageabschnitte (ausreichend tragfähig) an dem Verteilerrahmen befestigbar ist, insbesondere ausreichend tragfähig für eine Bestückung mit den Kabeln.

Auf diese Weise kommen die erfindungsgemäßen Vorteile besonders gut zum Tragen, da der Servicetechniker die Kabelablagevorrichtung nach der Montage bereits unmittelbar mit Kabeln bestücken kann, ohne dass weitere Befestigungsmaßnahmen erforderlich sind. Es kann grundsätzlich aber auch vorgesehen sein, dass erst zusätzliche Befestigungsmaßnahmen, beispielsweise erst die Befestigung der Trägeranordnung an der Kabelablagevorrichtung, eine ausreichende Tragfähigkeit für die Bestückung ermöglicht. Diese Variante ist jedoch nicht bevorzugt.

Gemäß einer Weiterbildung der Erfindung kann vorgesehen sein, dass die Kabelablagevorrichtung zwei Montageschenkel aufweist, die sich jeweils ausgehend von dem Kabelablageabschnitt erstrecken, wobei an zumindest einem Endabschnitt jedes Montageschenkels einer der Montageabschnitte angeordnet ist.

Vorzugsweise erstrecken sich die beiden Montageschenkel an zwei gegenüberliegenden Seiten des Kabelablageabschnitts und entlang oder entgegen einer Kabelablagemontagerichtung.

Die Montageschenkel können einen kabelablageabschnittsfernen (distalen) Endabschnitt und gegebenenfalls einen kabelablageabschnittsnahen (proximalen) Endabschnitt aufweisen. Die Montageabschnitte sind vorzugsweise an den jeweiligen kabelablageabschnittsfernen Endabschnitten angeordnet.

Grundsätzlich können auch noch weitere Montageschenkel vorgesehen sein, die sich ausgehend von dem Kabelablageabschnitt erstrecken, beispielsweise ein Montageschenkel ausgehend von jeweils einer Seite des Kabelablageabschnitts.

Es kann außerdem auch vorgesehen sein, dass die Montageschenkel jeweils zwei kabelablageabschnittsferne Endabschnitte aufweisen, so dass eine Montage der Kabelablagevorrichtung an frontseitigen und/oder rückseitigen Montagestreben des Verteilerrahmens erfolgen kann. In der Regel ist es allerdings ausreichend, wenn sich die Montageschenkel ausgehend von dem Kabelablageabschnitt ausschließlich entlang oder entgegen der Kabelablagemontagerichtung erstrecken, so dass eine Montage der Kabelablagevorrichtung vorzugsweise an einer frontseitigen Montagestrebe des Verteilerrahmens erfolgen kann (bevorzugt an der Innenseite des Verteilerrahmens, gegebenenfalls aber auch an der Außenseite des Verteilerrahmens).

Vorzugsweise ist eine U-förmige Anordnung des Kabelablageabschnitts und der Montageschenkel vorgesehen, so dass sich die Montageschenkel schienenförmig und vorzugsweise parallel seitlich des Kabelablageabschnitts über den Kabelablageabschnitt hinaus erstrecken. Die Montageschenkel können an ihren kabelablageabschnittsnahen Endabschnitten über den Kabelablageabschnitt miteinander verbunden sein.

Die Montageschenkel können einteilig oder mehrteilig mit dem Kabelablageabschnitt ausgebildet sein. Im mehrteiligen Fall können insbesondere jeweilige Rastelemente vorgesehen sein, um eine kraftschlüssige und/oder formschlüssige mechanische Befestigung zwischen Montageschenkel und Kabelablageabschnitt zu ermöglichen. Auch eine Verschraubung der Montageschenkel an dem Kabelablageabschnitt kann vorgesehen sein.

Die Montageabschnitte können beliebige Mittel zur kraftschlüssigen, formschlüssigen und/oder stoffschlüssigen Befestigung an dem Verteilerrahmen und/oder an der Trägeranordnung aufweisen. Beispielsweise können Rastmittel, Ausnehmungen, Schraubverbindungen, Nietverbindungen, Pressverbindungen, Klebeflächen, Schweißflächen etc. vorgesehen sein.

Es kann vorgesehen sein, dass die Montageschenkel und/oder der Kabelablageabschnitt jeweils Mittel zur Erhöhung der mechanischen Steifigkeit aufweisen. Eine Erhöhung der mechanischen Steifigkeit kann beispielsweise durch gezielte Umkantungen, Materialverstärkungen, Verstrebungen oder sonstige bekannte Ertüchtigungsmaßnahmen erreicht werden. Auch die Verwendung eines Materialverbundes aus zumindest zwei Grundmaterialien kann vorgesehen sein, beispielsweise eine Metall-Kunststoff-Kombination oder eine Kombination verschiedener Metalle oder Kunststoffe. Auf diese Weise ist es möglich, die Kabelablagevorrichtung aus dünnen Blechteilen auszugestalten und nachträglich zu versteifen, was die Materialkosten für die Herstellung reduzieren kann.

In einer besonders bevorzugten Weiterbildung der Erfindung kann vorgesehen sein, dass die Montageabschnitte jeweils wenigstens ein Befestigungspaar aufweisen, umfassend ein Trägerbefestigungselement zur Verbindung mit der Trägeranordnung und ein Rahmenbefestigungselement zur Verbindung mit dem Verteilerrahmen.

Das Trägerbefestigungselement kann vorzugsweise als Gewindebohrung ausgebildet sein. Grundsätzlich kann aber auch eine gewindefreie Bohrung vorgesehen sein, beispielsweise wenn das nachfolgend noch erwähnte Trägerbefestigungsgegenelement als gewindefurchendes Schraubenelement ausgebildet ist. Ferner kann beispielsweise auch vorgesehen sein, dass das Trägerbefestigungselement als Stift, insbesondere Gewindestift, oder sonstiges Schraubenelement ausgebildet ist. Insbesondere kann ein Normgewinde vorgesehen sein, wie u. a. M3, M4 (bevorzugt), M5, M6, M7 oder M8.

Vorzugsweise kann das Rahmenbefestigungselement als Befestigungsklammer ausgebildet sein. Das Rahmenbefestigungselement kann grundsätzlich aber beliebig ausgebildet sein, beispielsweise auch als Ausnehmung, insbesondere rechteckförmige bzw. quadratische Ausnehmung, zur Aufnahme einer Befestigungsklammer.

In einer besonders vorteilhaften Ausgestaltung kann vorgesehen sein, dass das Befestigungspaar einen Aufbau aufweist, der funktional einer Käfigmutter entspricht, insbesondere wenn das Trägerbefestigungselement als Gewindebohrung und das Rahmenbefestigungselement als Befestigungsklammer ausgebildet ist. Bei einer Käfigmutter (auch als "Kastenmutter" bekannt), handelt es sich in der Regel um eine rechteckige, insbesondere quadratische Mutter, die in einen Käfig aus Blech eingefasst ist, mittels dem die Käfigmutter an einem separaten Blechteil festgelegt bzw. verrastet werden kann. Käfigmuttern sind als Standardbefestigungselemente für die Befestigung von Geräten in Verteilerrahmen, insbesondere in 19-Zoll-Verteilerrahmen, bekannt.

In einer Weiterbildung der Erfindung kann vorgesehen sein, dass zumindest eines der Rahmenbefestigungselemente eines der Befestigungspaare als separates Befestigungsteil ausgebildet und an dem Montageabschnitt befestigt ist. Die separaten Befestigungsteile sind vorzugsweise an den kabelablageabschnittsfernen Endabschnitten der Montageschenkel befestigbar.

Insbesondere aus fertigungstechnischen Gründen kann es von Vorteil sein, die Rahmenbefestigungselemente separat von den Trägerbefestigungselementen auszuführen (insbesondere dann, wenn diese als Befestigungsklammern ausgebildet sind). Auf diese Weise können verschiedene Materialstärken und Materialien für die Trägerbefestigungselemente und Rahmenbefestigungselemente verwendbar sein, um jeweils optimale Befestigungseigenschaften für die unterschiedlichen Befestigungsaufgaben bereitzustellen. Grundsätzlich ist aber auch eine einteilige Ausgestaltung möglich, wonach die Rahmenbefestigungselemente mit dem Montageabschnitt einteilig bzw. monolithisch ausgebildet sind. Die Befestigungsklammern können also beispielsweise einteilig mit den Montageschenkeln ausgebildet und an dem kabelablageabschnittsfernen Endabschnitt der Montageschenkel angeordnet sein. Die nachfolgend beschriebene, mehrteilige Variante ist daher nicht einschränkend, sondern lediglich beispielhaft zu verstehen.

Vorzugsweise sind alle Rahmenbefestigungselemente gemeinsam als genau ein separates Befestigungsteil ausgebildet. Es können aber auch mehrere separate Befestigungsteile vorgesehen sein, die jeweils zumindest ein Rahmenbefestigungselement umfassen.

Die Montageschenkel und/oder der Kabelablageabschnitt der Kabelablagevorrichtung können beispielsweise als Stanz-Biege-Teile oder als Gussteile ausgebildet sein. Vorzugsweise sind die Montageschenkel und/oder der Kabelablageabschnitt aus einem Metall, beispielsweise Stahlblech, ausgebildet, insbesondere mit einer Materialstärke von 1 mm bis 10 mm, besonders bevorzugt 2 mm bis 5 mm, beispielsweise 3 mm. Grundsätzlich kann allerdings auch ein Kunststoffmaterial vorgesehen sein.

Das separate Befestigungsteil zur Ausbildung des zumindest einen Rahmenbefestigungselements kann vorzugsweise als Blechteil ausgebildet sein, insbesondere als Federblech mit einer Materialstärke von 0,05 mm bis 2,0 mm, vorzugsweise 0,1 mm bis 0,5 mm, beispielsweise 0,2 mm. Das separate Befestigungsteil kann vorzugsweise als Stanz-Biege-Teil ausgebildet sein.

Das separate Rahmenbefestigungselement bzw. die separaten Rahmenbefestigungselemente können vorzugsweise mittels Rastlaschen an dem Trägerbefestigungselement bzw. den Trägerbefestigungselementen befestigt werden. Dies kann beispielsweise bereits im Rahmen einer Vormontage der Kabelablagevorrichtung erfolgen und muss daher nicht unbedingt von dem Servicetechniker vor Ort separat durchgeführt werden.

Grundsätzlich kann eine Befestigung der separaten Rahmenbefestigungselemente an dem Montageabschnitt auf beliebige Weise erfolgen (formschlüssig, kraftschlüssig und/oder stoffschlüssig). Die Rahmenbefestigungselemente können beispielsweise mit dem Montageabschnitt auch verschraubt, verpresst oder verschweißt sein. Eine (vorzugsweise zerstörungsfrei lösbare) Verrastung ist allerdings besonders bevorzugt. Wie vorstehend bereits erwähnt, kann auch eine Einteiligkeit der Rahmenbefestigungselemente mit dem Montageabschnitt vorgesehen sein bzw. die Rahmenbefestigungselemente können durch die Montageabschnitte gebildet werden.

In einer vorteilhaften Weiterbildung der Erfindung kann vorgesehen sein, dass die Montageabschnitte jeweils wenigstens zwei Befestigungspaare aufweisen, vorzugsweise jeweils wenigstens drei Befestigungspaare aufweisen. Grundsätzlich kann eine beliebige Anzahl Befestigungspaare pro Montageabschnitt vorgesehen sein, also beispielsweise auch nur genau ein Befestigungspaar oder mehr als drei Befestigungspaare, z. B. vier, fünf, sechs, sieben, acht oder noch mehr Befestigungspaare. Die verschiedenen Montageabschnitte können auch jeweils eine unterschiedliche Anzahl Befestigungspaare aufweisen, wobei eine symmetrische Verteilung der Befestigungspaare allerdings bevorzugt ist.

Durch die Erhöhung der Anzahl Befestigungspaare kann die mechanische Stabilität bzw. Tragfähigkeit der Kabelablagevorrichtung verbessert sein, insbesondere wenn die Kabelablagevorrichtung bereits ohne die Trägeranordnung ausreichend stabil an dem Verteilerrahmen befestigt sein soll, um noch vor der Montage der Trägeranordnung eine Kabelbestückung auf dem Kabelablageabschnitt vorzunehmen.

Es kann insbesondere vorgesehen sein, dass die Befestigungspaare desselben Montageabschnittes quer (vorzugsweise, aber nicht notwendigerweise orthogonal) zu einer Kabelablagemontagerichtung zueinander angeordnet sind (insbesondere entlang einer gemeinsamen Geraden).

Vorzugsweise sind die Befestigungspaare desselben Montageabschnittes in ganzzahligen Vielfachen (z. B. 1-fach, 2-fach, 3-fach, 4-fach, 5-fach, 6-fach etc.) eines Drittels einer so genannten "Höheneinheit" voneinander beabstandet. Auch eine Beabstandung in ganzzahligen Vielfachen (z. B. 1-fach, 2-fach, 3-fach, 4-fach, 5-fach, 6-fach etc.) einer ganzen Höheneinheit kann vorgesehen sein.

Insofern vorstehend und nachstehend von einer "Höheneinheit" gesprochen wird, so handelt es sich dabei um eine für Elektronikgehäuse typischerweise verwendete, dem Fachmann geläufige und genormte Maßeinheit, die insbesondere bezogen auf Gerätegehäuse zum Einbau in 19-Zoll-Racks bzw. 19-Zoll-Verteilerrahmen Verwendung findet. Eine Höheneinheit entspricht 1¾ Zoll bzw. 44,45 Millimeter.

Die Bauhöhe der Kabelablagevorrichtung beträgt vorzugsweise eine Höheneinheit bzw. ist vorzugsweisen nicht größer als eine Höheneinheit. Grundsätzlich kann die Bauhöhe der Kabelablagevorrichtung allerdings auch größer sein als eine Höheneinheit oder kleiner sein als eine Höheneinheit. Es kann unter anderem vorgesehen sein, dass die Bauhöhe der Kabelablagevorrichtung zwei Drittel einer Höheneinheit oder ein Drittel einer Höheneinheit nicht überschreitet.

Neben der vorstehend und nachfolgend beschriebenen horizontalen Montage der Kabelablagevorrichtung bzw. Trägeranordnung in dem Verteilerrahmen, wodurch sich mehrere Kabelablagevorrichtungen bzw. Trägeranordnungen in vertikaler Richtung in der Art eines Stapels in dem Verteilerrahmen anordnen lassen, kann auch eine vertikale Montage vorgesehen sein, also eine in dem Verteilerrahmen "hängende" Ausgestaltung der Kabelablagevorrichtungen bzw. Trägeranordnungen. Die Montagerichtungen können dann vertikal bzw. orthogonal zu der Aufstellfläche des Verteilerrahmens verlaufen. Auch eine gemischt horizontale und vertikale Einbausituation, also eine in Bezug auf die Aufstellfläche des Verteilerrahmens schräge Montage der Kabelablagevorrichtung bzw. Trägeranordnung kann vorgesehen sein. Vorliegend ist die Erfindung zum leichteren Verständnis im Wesentlichen anhand der rein horizontalen Montage beschrieben. Die nachfolgenden Varianten und Weiterbildungen eigenen sich allerdings auch für eine hängende bzw. vertikale Montage oder für eine schräge Montage, sofern dies technisch nicht ausgeschlossen ist.

Die Erfindung betrifft auch ein Trägersystem, aufweisend eine Kabelablagevorrichtung gemäß den vorstehenden und nachfolgenden Ausführungen und wenigstens eine Trägeranordnung. Die Trägeranordnung weist Befestigungspunkte zur Befestigung an den Montageabschnitten der Kabelablagevorrichtung auf. Die Befestigungspunkte eignen sich vorzugsweise außerdem auch zur Befestigung an dem faseroptischen Verteilerrahmen.

Es kann vorgesehen sein, dass die Trägeranordnung ein Trägergehäuse mit zumindest einer Trägereinheit aufweist. Die Befestigungspunkte können in diesem Fall vorzugsweise seitlich oder stirnseitig an dem Trägergehäuse ausgebildet sein.

Vorzugsweise ist allerdings vorgesehen, dass die Trägeranordnung kein Trägergehäuse, sondern lediglich eine Schienenanordnung für die Trägereinheit aufweist. In diesem Fall kann vorgesehen sein, dass jede der Montageschienen wenigstens einen der Befestigungspunkte aufweist, vorzugsweise im Bereich eines Endabschnittes der Montageschiene. Vorzugsweise sind die Montageschienen über die Befestigungspunkte an einer Vorderseite des Verteilerrahmens befestigbar, insbesondere von vorne.

Die Schienenanordnung kann eine erste Montageschiene und eine separate zweite Montageschiene aufweisen, wobei die Montageschienen voneinander beabstandet und ausgebildet sein können, die Trägereinheit gemeinsam zwischeneinander aufzunehmen. Die Trägereinheit kann vorzugsweise unmittelbar mit den beiden Montageschienen verbunden sein. Es kann vorzugsweise vorgesehen sein, dass es sich bei den Montageschienen der Schienenanordnung um voneinander unabhängige Befestigungsteile handelt, die auch im montierten Zustand nicht miteinander verbunden sind - abgesehen von der gemeinsamen Verbindung mit der Trägereinheit und der gemeinsamen Verbindung mit dem Verteilerrahmen. Insbesondere kann auf zusätzliche Verbindungsstreben oder Verbindungsbleche zwischen den beiden Montageschienen einer gemeinsamen Schienenanordnung verzichtet werden. Die beiden Montageschienen verlaufen vorzugsweise entlang ihrer Längserstreckungen bzw. Längsachsen parallel oder zumindest im Wesentlichen parallel zueinander. Die Schienenanordnung kann in einer minimalistischen Ausführungsform beispielsweise zwei L-förmige Profilschienen umfassen, die die Montageschienen ausbilden und die unabhängig voneinander und ohne gegenseitige Verbindung an den Stützen eines Verteilrahmens montierbar sind.

Durch die Verwendung separater Montageschienen in der vorgeschlagenen Trägeranordnung kann aufgrund der vorzugsweise gehäuselosen Trägereinheiten eine sehr gute Zugänglichkeit zu den Trägereinheiten bzw. in den Innenraum des Verteilerrahmens bereitgestellt werden. Gleichzeitig wird eine besonders modulare Zusammenstellung verschiedener Arten und Höhenvarianten von Trägereinheiten möglich. Auf diese Weise kann außerdem der Zugang zu den rückwärtigen Ports auf der Trägereinheit verbessert werden. Eine starre Verschraubung individueller Trägergehäuse kann vermieden werden und der Zugang zu den Trägereinheiten wird nicht von dem geschlossenen Trägergehäuse blockiert. Die Montagezeit kann dadurch weiter reduziert und die Wartungsfreundlichkeit erhöht sein.

Schließlich bietet sich durch den offenen Aufbau der zweigeteilten Schienenanordnung (also durch die zwei separaten Montageschienen) die Möglichkeit, die Kabel bzw. "Trunks" zwischen verschiedenen Höhenebenen des Verteilerrahmens noch vorteilhafter einzusetzen.

Die Trägereinheit (insbesondere ein Rangierfeld oder ein Einschubfach) weist vorzugsweise zumindest eine faseroptische Komponente auf (oder bietet zumindest die Möglichkeit zur Aufnahme einer faseroptischen Komponente) und kann beweglich oder unbeweglich bzw. starr zwischen den Montageschienen der Schienenanordnung oder in dem Trägergehäuse aufgenommen sein.

Die Schienenanordnung oder das Trägergehäuse kann insbesondere ausgebildet sein, die Trägereinheit entlang wenigstens eines Freiheitsgrades (insbesondere entlang wenigstens eines Translationsfreiheitsgrades) bewegbar zu führen und/oder eine Befestigungs- oder Ablagemöglichkeit für die Trägereinheit bereitzustellen.

Die vorgeschlagene Kabelablagevorrichtung kann sich besonders vorteilhaft zur Verwendung mit optischen Einschubfächern oder Rangierfeldern eignen, gegebenenfalls auch zur Verwendung mit optisch-elektrischen Einschubfächern bzw. Rangierfeldern. Ein Einschubfach bzw. Rangierfeld beinhaltet optische und/oder elektrische Verteiltechnik und kann beispielsweise einzelne faseroptische und/oder elektrische Module bzw. Kassetten, einzelne faseroptische und/oder elektrische Steckverbinder (insbesondere Buchsen), Einrichtungen zur Speicherung von faseroptischen und/oder elektrischen Leitern und Leitungen oder sonstige optische und/oder elektrische Komponenten aufweisen. Die Trägereinheit kann auch nur zur reinen Aufnahme bzw. Ablage/Aufbewahrung und/oder zum Spleißen von Leitungen ausgebildet sein. Selbst Dummy-Trägereinheiten bzw. Dummy-Rangierfelder können vorgesehen sein.

Die Montageschienen der Schienenanordnung oder das Trägergehäuse können aus einem Metallbauteil ausgebildet sein oder zumindest metallische Komponenten aufweisen. Beispielsweise können die Montageschienen oder das Trägergehäuse umgeformte Blechteile aufweisen oder als umgeformte Blechteile ausgebildet und zum Beispiel im Rahmen eines Stanz-Biege-Prozesses hergestellt sein. Die Montageschienen bzw. das Trägergehäuse können aber auch aus einem Kunststoff ausgebildet sein oder zumindest Kunststoffkomponenten aufweisen.

In einer Weiterbildung der Erfindung kann vorgesehen sein, dass die Befestigungspunkte an einem Endabschnitt des Trägergehäuses oder der Montageschienen ausgebildet sind, insbesondere an einem in Auszugsrichtung der Trägereinheit vorderen Ende des Trägergehäuses oder der Montageschienen.

Insbesondere kann vorgesehen sein, dass der den Befestigungspunkt aufweisende Endabschnitt quer bzw. orthogonal zu der Ein- / Auszugsrichtung der Trägereinheit verläuft, beispielsweise als Lasche oder Fahne. Der Befestigungspunkt kann aber beispielsweise auch an einer Seitenfläche der Montageschiene oder des Trägergehäuses ausgebildet sein. Grundsätzlich kann der Befestigungspunkt an einem beliebigen Abschnitt der Montageschiene bzw. des Trägergehäuses vorgesehen sein, also auch an einem mittleren Abschnitt (optional wiederum als Lasche oder Fahne).

Die Trägeranordnung kann über die Befestigungspunkte vorzugsweise an vorgesehenen Befestigungsposition bzw. Höhenebene des Verteilerrahmens positioniert und über separate Trägerbefestigungsgegenelemente (z. B. ein Schraubenelement, insbesondere eine Schraube mit einem Normgewinde, wie u. a. M5, ein Bolzen oder eine Federklemme) an dem Verteilerrahmen und gleichzeitig an der Kabelablagevorrichtung befestigt werden, insbesondere an den korrespondierenden Trägerbefestigungselementen der Montageabschnitte.

Vorzugsweise handelt es sich bei dem Befestigungspunkt um eine Ausnehmung, beispielsweise um eine Bohrung in der Montageschiene oder in dem Trägergehäuse, vorzugsweise eine übergroße Bohrung oder ein Langloch, besonders bevorzugt ein schräg verlaufendes Langloch. Durch ein Langloch oder eine übergroße Bohrung kann sichergestellt werden, dass Montagetoleranzen bei der Befestigung ausgeglichen werden können. Durch ein schräg verlaufendes Langloch oder eine übergroße Bohrung können vorteilhaft vertikale wie auch horizontale Korrekturen in der Positionierung vorgenommen werden.

Der Befestigungspunkt kann auch als Vorsprung, beispielsweise Stift, Steg oder Gewindestift, ausgebildet sein, um die Trägeranordnung unmittelbar in einer Ausnehmung des Verteilerrahmens und/oder der Kabelablagevorrichtung zu befestigen. Es kann auch vorgesehen sein, dass der Befestigungspunkt eine Schnappverbindung aufweist.

Die Erfindung betrifft auch ein faseroptisches Verteilersystem, aufweisend wenigstens eine Kabelablagevorrichtung gemäß den vorstehenden und nachfolgenden Ausführungen und den faseroptischen Verteilerrahmen ("Rack", insbesondere - aber nicht ausschließlich - ein herkömmlicher 19-Zoll-Rack).

Der Verteilerrahmen weist vorzugsweise zumindest zwei Montagestreben zur Befestigung mehrerer Trägeranordnungen auf. Insbesondere können hierfür zwei frontseitige Vertikalstreben (z. B. um 19 Zoll voneinander beabstandete frontseitige Vertikalstreben) vorgesehen sein, zur Befestigung der Trägeranordnungen in verschiedenen Höhenebenen. Im Grunde können sich aber auch rückseitige Vertikalstreben, mittlere Vertikalstreben und auch Horizontalstreben zur Befestigung der Trägeranordnungen und/oder Kabelablagevorrichtungen eignen.

Insofern mehrere Trägeranordnungen und/oder Kabelablagevorrichtungen innerhalb des Verteilerrahmens vorgesehen sind, sind diese in dem Verteilerrahmen vorzugsweise in verschiedenen Höhenebenen befestigt und/oder in einer hängenden Anordnung in dem Verteilerrahmen angeordnet.

Es kann vorgesehen sein, zwei, drei, vier, fünf, sechs, sieben, acht, neun, zehn, zwanzig, dreißig, vierzig, fünfzig oder noch mehr Trägeranordnungen und/oder Kabelablagevorrichtungen in verschiedenen Höhenebenen, vorzugsweise unmittelbar übereinander, in einem gemeinsamen Verteilerrahmen zu montieren. Insbesondere kann ein solcher Stapel aus mehreren Trägeranordnungen und/oder Kabelablagevorrichtungen sukzessive aufgebaut werden. Der Verteilerrahmen kann beliebig mit Kabelablagevorrichtungen und Trägereinheiten, insbesondere Rangierfeldern bzw. Trägeranordnungen, bestückt werden.

In einer vorteilhaften Weiterbildung der Erfindung kann vorgesehen sein, dass die wenigstens eine Trägeranordnung entlang einer Trägermontagerichtung und die wenigstens eine Kabelablagevorrichtung entlang einer hierzu entgegengerichteten Kabelablagemontagerichtung in dem Verteilerrahmen an denselben Montagestreben montierbar sind. Bei der Montage der Trägeranordnung und der Kabelablagevorrichtung ausgehend von entgegengesetzten Richtungen (insbesondere die Kabelablagevorrichtung von hinten und die Trägeranordnung von vorne, gegebenenfalls aber auch umgekehrt) handelt es sich um die bevorzugte Montagevariante. Es kann allerdings auch vorgesehen sein, dass die Trägermontagerichtung und die Kabelablagemontagerichtung in dieselbe Richtung verlaufen - die Trägeranordnung und die Kabelablagevorrichtung können also auch ausgehend von derselben Richtung (beide von vorne oder beide von hinten) an dem Verteilerrahmen montiert werden.

Vorzugsweise ist die Kabelablagevorrichtung ausgehend von der Rückseite des Verteilerrahmens in Richtung auf die Vorderseite des Verteilerrahmens montierbar, insbesondere innenseitig an den frontseitigen Montagestreben des Verteilerrahmens. Ebenfalls bevorzugt kann die Trägeranordnung ausgehend von vorne in den Verteilerrahmen montierbar sein, insbesondere außenseitig an den frontseitigen Montagestreben des Verteilerrahmens.

In einer vorteilhaften Weiterbildung der Erfindung kann vorgesehen sein, dass die Montagestreben des Verteilerrahmens Rahmenbefestigungsgegenelemente zur unmittelbaren Verbindung mit den Rahmenbefestigungselementen der Montageabschnitte der Kabelablagevorrichtung aufweisen.

Bei den Rahmenbefestigungsgegenelemente kann es sich insbesondere um von den Befestigungsklammern der Kabelablagevorrichtung hintergreifbare Befestigungsausnehmungen handeln, vorzugsweise rechteckige, insbesondere quadratische Befestigungsausnehmungen, beispielsweise solche, die auch zur Montage von Käfigmuttern geeignet sind. Bei den Befestigungsausnehmungen kann es sich insbesondere um Durchbrüche mit den Maßen 9,5 x 9,5 mm handeln.

Auf vorteilhafte Weise kann somit vorgesehen sein, dass als Befestigungsklammer ausgebildete Rahmenbefestigungselemente der Kabelablagevorrichtung auf der von der Vorderseite des Verteilerrahmens abgewandten Rückseite frontseitiger Vertikalstreben des Verteilerrahmens in korrespondierende Befestigungsausnehmungen eingerastet werden. Somit kann die Kabelablagevorrichtung bereits einzig unter Verwendung der Befestigungsklammern tragfähig in dem Verteilerrahmen befestigt sein. Gleichzeitig können die Montageabschnitte der Kabelablagevorrichtung die Trägerbefestigungselemente zur Befestigung der Trägeranordnung bereitstellen (insbesondere eine Gewindebohrung). Auf diese Weise ergibt sich ein Aufbau analog einer Käfigmutter.

Die Montagestrebe und/oder die Befestigungsausnehmung kann ausgebildet sein, um die Befestigungsklammern der Kabelablagevorrichtung aufzunehmen und gleichzeitig das zentrale Durchführen des Trägerbefestigungsgegenelements zu ermöglichen. Die Befestigungsklammern der Kabelablagevorrichtung können insbesondere ausreichend elastisch ausgebildet sein, so dass sich diese während der Montage ausreichend verbiegen lassen, ohne eine dauerhafte Verformung oder einen Bruch zu erfahren.

Die Erfindung betrifft auch ein Verfahren zur Montage eines faseroptischen Verteilersystems, aufweisend zumindest die folgenden Verfahrensschritte:
- Bereitstellen und Befestigen einer Kabelablagevorrichtung an einem faseroptischen Verteilerrahmen mittels zweier, an verschiedenen Seiten eines Kabelablageabschnitts angeordneter Montageabschnitte der Kabelablagevorrichtung; und
- Ablegen, Befestigen und/oder Führen von Kabeln (insbesondere "Trunks" bzw. Trunk-Kabeln) des faseroptischen Verteilersystems auf dem Kabelablageabschnitt der in dem Verteilerrahmen zuvor befestigten Kabelablagevorrichtung.

Besonders bevorzugt kann eine in dem Verteilerrahmen (insbesondere werkzeuglos) verrastende Kabelablagevorrichtung bzw. Trunk-Halterung bereitgestellt werden. Die Kabelablagevorrichtung kann von dem Servicetechniker provisorisch oder dauerhaft an dem Verteilerrahmen fixiert werden. Vorzugsweise ist die Fixierung der Kabelablagevorrichtung an dem Verteilerrahmen mittels der Montageabschnitte so ausgelegt, dass eine Installation der Kabel ("Trunk-Kabel") in dem Kabelablageabschnitt bereits dann möglich ist, wenn ausschließlich die Kabelablagevorrichtung, jedoch noch keine zugeordnete Trägeranordnung montiert ist.

Optional kann in einem weiteren Verfahrensschritt vorgesehen sein, eine Trägeranordnung für eine faseroptische Komponente bereitzustellen und in dem Verteilerrahmen zur Verwendung mit der zuvor montierten Kabelablagevorrichtung zu befestigen.

In einer vorteilhaften Weiterbildung der Erfindung kann vorgesehen sein, dass die Montageabschnitte der Kabelablagevorrichtung zur Befestigung der Kabelablagevorrichtung an dem Verteilerrahmen und außerdem zur Befestigung der Kabelablagevorrichtung an der Trägeranordnung verwendet werden.

Somit kann nach der Fixierung der Kabelablagevorrichtung und dem Bestücken derselben mit Kabeln die zugeordnete Trägeranordnung an dem Verteilerrahmen befestigt werden. Dies erfolgt vorzugsweise unter Wiederverwendung der Montageabschnitte der Kabelablagevorrichtung, insbesondere derart, dass zwischen den Montageabschnitten der Kabelablagevorrichtung und den Befestigungspunkten der Trägeranordnung die jeweiligen Montagestreben des Verteilerrahmens angeordnet sind. Die Montagestreben können also zwischen den Montageabschnitten der Kabelablagevorrichtung und den Befestigungspunkten der Trägeranordnung verklemmt werden, insbesondere mittels einer Schraubverbindung zwischen einem jeweiligen Befestigungspunkt der Trägeranordnung und einem korrespondierenden Montageabschnitt der Kabelablagevorrichtung. Im Falle dieser Anordnung erfolgt die Montage der Trägeranordnung und der Kabelablagevorrichtung ausgehend von einander entgegengesetzten Montagerichtungen. Wie vorstehend erwähnt, kann aber auch eine Montage entlang derselben Montagerichtung vorgesehen sein - in diesem Fall ergibt sich in der Regel eine Anordnung, bei der die Montageabschnitte der Kabelablagevorrichtung zwischen den Montagestreben des Verteilerrahmens und den Befestigungspunkten der Trägeranordnung befestigt sind.

Erfindungsgemäß kann die Montagezeit faseroptischer Verteilertechnik innerhalb des Verteilerrahmens wesentlich verkürzt werden. Die Zugänglichkeit zum Innenraum des Verteilerrahmens wird während der Installation der Kabel bzw. "Trunks" erleichtert. Ferner kann auf die Verwendung herkömmlicher, separater Käfigmuttern zur Installation der Trägeranordnung verzichtet werden, was den Aufwand und das Verletzungsrisiko für den Servicetechniker deutlich reduziert. Dies wird unter anderem dadurch ermöglicht, dass die Kabelablagevorrichtung im Rahmen der Erfindung nicht mehr Teil einer Trägeranordnung ist, insbesondere nicht mehr Teil eines Trägergehäuses oder einer Schienenanordnung der Trägereinheit.

Merkmale, die im Zusammenhang mit einem der Gegenstände der Erfindung, namentlich gegeben durch die erfindungsgemäßen Kabelablagevorrichtung, das erfindungsgemäße Trägersystem, das erfindungsgemäße faseroptische Verteilersystem und das erfindungsgemäße Verfahren beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: ein faseroptisches Verteilersystem aus einer Kabelablagevorrichtung und einem faseroptischen Verteilerrahmen, während der Montage der Kabelablagevorrichtung, gemäß einem Ausführungsbeispiel der Erfindung;
- Figur 2: eine Ausschnittsvergrößerung eines Montageabschnittes der Kabelablagevorrichtung gemäß Figur 1;
- Figur 3: die einzelnen Komponenten des mehrteiligen Montageabschnittes der Kabelablagevorrichtung gemäß Figur 1;
- Figur 4: eine Ausschnittsvergrößerung der in dem Verteilerrahmen montierten Kabelablagevorrichtung gemäß Figur 1;
- Figur 5: die in dem Verteilerrahmen montierten Kabelablagevorrichtung gemäß Figur 1, während der Vorbestückung des Kabelablageabschnittes mit einem Kabel;
- Figur 6: eine beispielhafte Trägeranordnung zur Verwendung mit der Kabelablagevorrichtung gemäß Figur 1, die zwei Montageschienen und eine zwischen den Montageschienen geführte Trägereinheit aufweist;
- Figur 7: eine Ausschnittsvergrößerung der in dem Verteilerrahmen zusammen mit der Kabelablagevorrichtung montierten Trägeranordnung;
- Figur 8: die in dem Verteilerrahmen zusammen mit der Kabelablagevorrichtung montierte Trägeranordnung in einer vollständigen Darstellung;
- Figur 9: eine Schnittdarstellung der Verbindungsstelle zwischen einem Montageabschnitt der Kabelablagevorrichtung und einer Montagestrebe des Verteilerrahmens in einem nicht montierten Zustand der Kabelablagevorrichtung;
- Figur 10: eine Schnittdarstellung gemäß Figur 9 in einem montierten Zustand der Kabelablagevorrichtung und einem nicht montierten Zustand der Trägeranordnung; und
- Figur 11: eine Schnittdarstellung gemäß Figur 9 in einem montierten Zustand der Kabelablagevorrichtung und der Trägeranordnung.

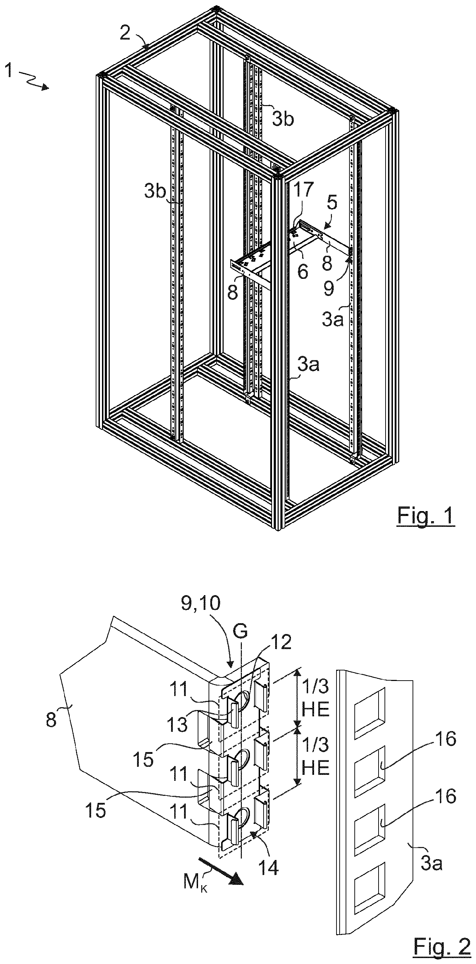

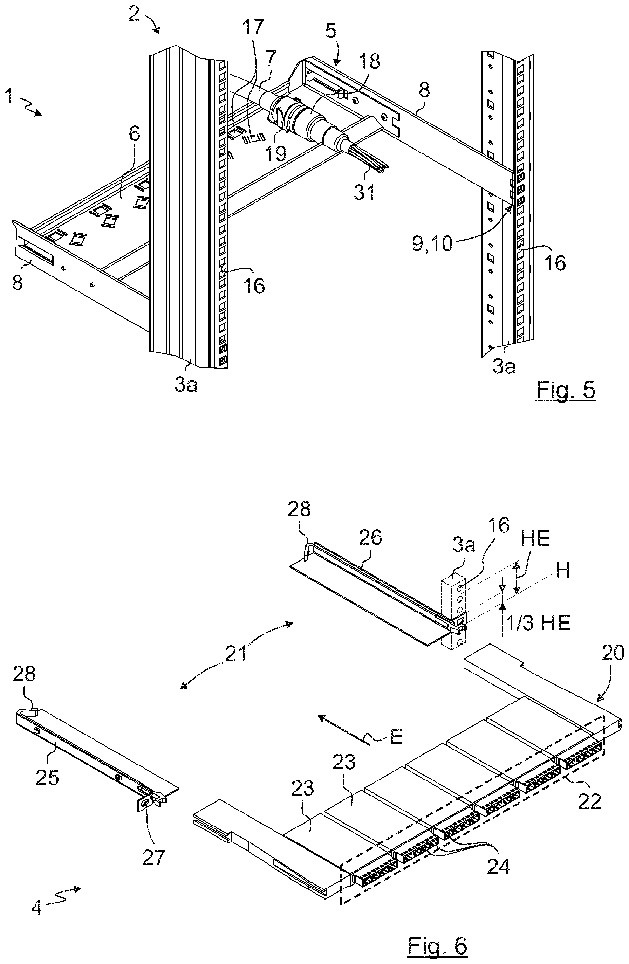

Die Figuren 1 bis 11 zeigen ein faseroptisches Verteilersystem 1 gemäß einem Ausführungsbeispiel der Erfindung. In Figur 1 ist zunächst ein faseroptischer Verteilerrahmen 2 ("Rack") mit mehreren Montagestreben 3a, 3b zur Befestigung von Trägeranordnungen 4 (vgl. Figur 6) gezeigt. Zwei der Montagestreben sind als frontseitige Vertikalstreben 3a und zwei weitere der Montagestreben als rückseitige Vertikalstreben 3b ausgebildet. Entsprechende Verteilerrahmen 2 sind bekannt, weshalb der dargestellte Verteilerrahmen 2 lediglich beispielhaft und nicht einschränkend zu verstehen ist.

Im Rahmen eines Verfahrens zur Montage des faseroptischen Verteilersystem 1 ist vorgesehen, zunächst eine Kabelablagevorrichtung 5 bereitzustellen und an dem faseroptischen Verteilerrahmen 2 zu befestigen. In Figur 1 ist die Kabelablagevorrichtung 5 innerhalb des Verteilerrahmens 2 gezeigt. Figur 2 stellt eine Ausschnittsvergrößerung dar.

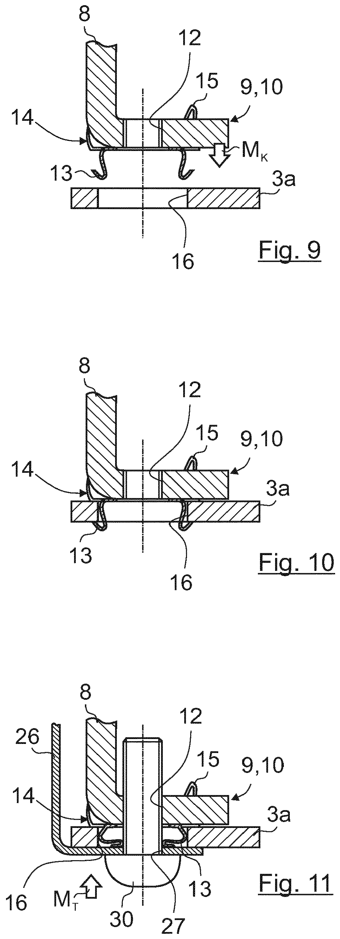

Die Kabelablagevorrichtung 5 weist einen Kabelablageabschnitt 6 zur Ablage, Befestigung und/oder Führung von Kabeln 7 (vgl. Figur 5) des faseroptischen Verteilersystems 1 auf. Ferner sind zwei Montageschenkel 8 vorgesehen, die sich an zwei gegenüberliegenden Seiten des Kabelablageabschnitts 6 jeweils ausgehend von dem Kabelablageabschnitt 6 entlang einer Kabelablagemontagerichtung M_{K} (vgl. Figur 2 und Figur 9) erstrecken. An einem kabelablageabschnittsfernen Endabschnitt 9, der in Figur 2 gut erkennbar ist, ist an jedem der Montageschenkel 8 jeweils ein Montageabschnitt 10 angeordnet, mittels dem die Kabelablagevorrichtung 5 an dem optischen Verteilerrahmen 2 befestigbar ist. Die Kabelablagemontagerichtung M_{K} verläuft in der Regel ausgehend von der Rückseite des Verteilerrahmens 2 zu der Vorderseite des Verteilerrahmens 2, also ausgehend von den rückseitigen Vertikalstreben 3b in Richtung auf die frontseitigen Vertikalstreben 3a. Die Kabelablagemontagerichtung M_{K} kann allerdings auch entgegengesetzt zu der Darstellung in Figur 2, also ausgehend von der Vorderseite des Verteilerrahmens 2 zu der Rückseite des Verteilerrahmens 2 verlaufen (die Montageschenkel 8 erstrecken sich in diesem Fall vorzugsweise entgegen der Kabelablagemontagerichtung M_{K}).

Im Rahmen des dargestellten Ausführungsbeispiels ist vorgesehen, dass der Montageabschnitt 10 einerseits zur Befestigung der Kabelablagevorrichtung 5 an dem Verteilerrahmen 2 und außerdem auch zur Befestigung der Kabelablagevorrichtung 5 an der Trägeranordnung 4 (vgl. Figur 6) dient. Hierzu weisen die Montageabschnitte 10 jeweils mehrere Befestigungspaare 11 auf (vgl. Figur 2) - in den Ausführungsbeispielen jeweils drei Befestigungspaare 11 - wobei jedes Befestigungspaar 11 ein Trägerbefestigungselement 12 zur Verbindung mit der Trägeranordnung 4 und ein Rahmenbefestigungselement 13 zur Verbindung mit dem Verteilerrahmen 2 aufweist. Das Trägerbefestigungselement 12 ist in den Ausführungsbeispielen als Gewindebohrung und das Rahmenbefestigungselement 13 als Befestigungsklammer (zwei gegenüberliegende Federarme) ausgebildet. Die Befestigungspaare 11 desselben Montageabschnitts 10 sind quer zu der Kabelablagemontagerichtung M_{K} entlang einer gemeinsamen Geraden G (vgl. Figur 2) angeordnet und entlang der Geraden G in ganzteiligen Vielfachen eines Drittels einer Höheneinheit HE voneinander beabstandet.

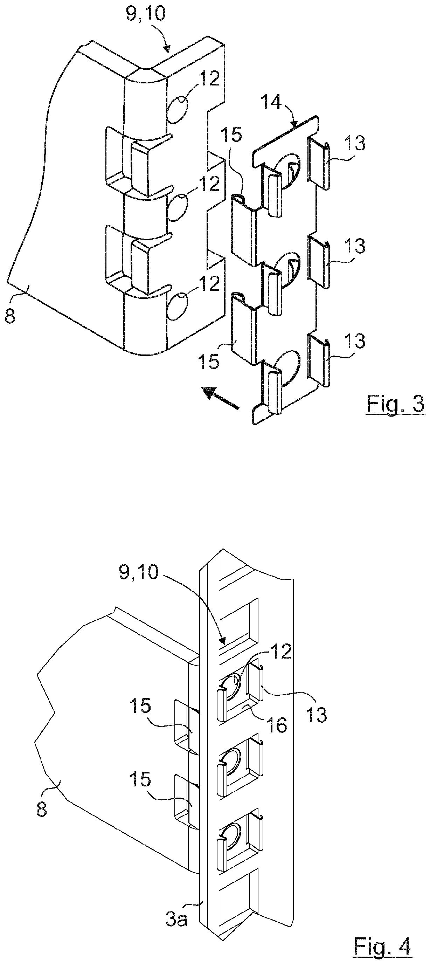

Aus fertigungstechnischen Gründen kann es von Vorteil sein, alle Rahmenbefestigungselemente 13 bzw. Befestigungsklammern gemeinsam als separates Befestigungsteil 14 auszubilden, insbesondere als Blechbauteil (z. B. als Federblech). Dieses separate Befestigungsteil 14 kann an dem Montageabschnitt 10 befestigbar sein. Zur Verdeutlichung sind die Rahmenbefestigungselemente 13 und Trägerbefestigungselemente 12 in Figur 3 in einem demontierten Zustand dargestellt. Zur Befestigung des die Rahmenbefestigungselemente 13 aufweisenden Befestigungsteils 14 kann dieses Rastlaschen 15 aufweisen, um entsprechende Kanten bzw. Rücksprünge des kabelablageabschnittfernen Endabschnitts 9 des Montageschenkels 8 zu hintergreifen. Grundsätzlich ist allerdings auch ein einteiliger Aufbau möglich.

In den Figuren 4 und 5 ist ein montierter Zustand der Kabelablagevorrichtung 5 in dem Verteilerrahmen 2 gezeigt. Wie sich insbesondere anhand des vergrößerten Ausschnitts in Figur 4 ergibt, sind die kabelablageabschnittfernen Endabschnitte 9 der Montageschenkel 8 jeweils rückseitig an den frontseitigen Vertikalstreben 3a befestigt. Die frontseitigen Vertikalstreben 3a des Verteilerrahmens 2 weisen hierzu Rahmenbefestigungsgegenelemente 16 zur unmittelbaren Verbindung mit den Rahmenbefestigungselementen 13 der Montageabschnitte 10 der Kabelablagevorrichtung 5 auf. Im Ausführungsbeispiel handelt es sich bei den Rahmenbefestigungsgegenelementen 16 um von den Befestigungsklammern 13 hintergreifbare Befestigungsausnehmungen, vorzugsweise mit den Maßen 9,5 mm x 9,5 mm. Derartige Befestigungsausnehmungen sind in den Montagestreben 3a, 3b eines Verteilerrahmens 2 in der Regel ohnehin vorhanden, da in diese bei der herkömmlichen Montagetechnik der Trägeranordnungen 4 mittels Käfigmuttern eingesetzt werden.

Auf die vorgeschlagene Weise kann die Kabelablagevorrichtung 5 einzig unter Verwendung der Montageabschnitte 10 bereits ausreichend tragfähig für eine Bestückung mit den Kabeln 7 an dem Verteilerrahmen 2 befestigt sein. Die Befestigung kann dabei in einer beliebigen Höhenebene H in dem Verteilerrahmen 2 erfolgen, wobei insbesondere auch mehrere Kabelablagevorrichtungen 5 in der Art eines Stapels montierbar sein können. Nach der Befestigung der Kabelablagevorrichtung 5 in dem Verteilerrahmen 2 kann von dem Servicetechniker bereits mit dem Ablegen, Befestigen und/oder Führen der Kabel 7 des faseroptischen Verteilersystems 1 begonnen werden. Die Zugänglichkeit von der Vorderseite des Verteilerrahmens 2 ist für den Servicetechniker besonders komfortabel.

Der Kabelablageabschnitt 6 weist hierzu mechanische Aufnahmeschnittstellen 17 für die Kabel 7 oder für Kabelköpfe 18 der Kabel 7 auf. In Figur 5 ist beispielhaft ein separates Rastelement 19 angedeutet, das ausgebildet ist, den Kabelkopf 18 des dargestellten Kabels 7 aufzunehmen. Die Kabel 7 können dem Kabelablageabschnitt 6 ausgehend von hinten, mitunter aber auch von der Seite zugeführt werden. Das Rastelement 19 kann in entsprechende Aufnahmeschnittstellen 17 (Rastausnehmungen) des Kabelablageabschnitts 6 eingerastet werden.

Figur 6 zeigt beispielhaft eine Trägeranordnung 4, die sich besonders vorteilhaft zur Verwendung mit der vorliegenden Kabelablagevorrichtung 5 eignen kann. An dieser Stelle sei allerdings erwähnt, dass sich die vorgeschlagene Kabelablagevorrichtung 5 grundsätzlich zur Verwendung mit einer beliebigen Trägeranordnung 4 eignen kann. Die Verwendung mit der in Figur 6 gezeigten Variante ist daher lediglich beispielhaft zu verstehen.

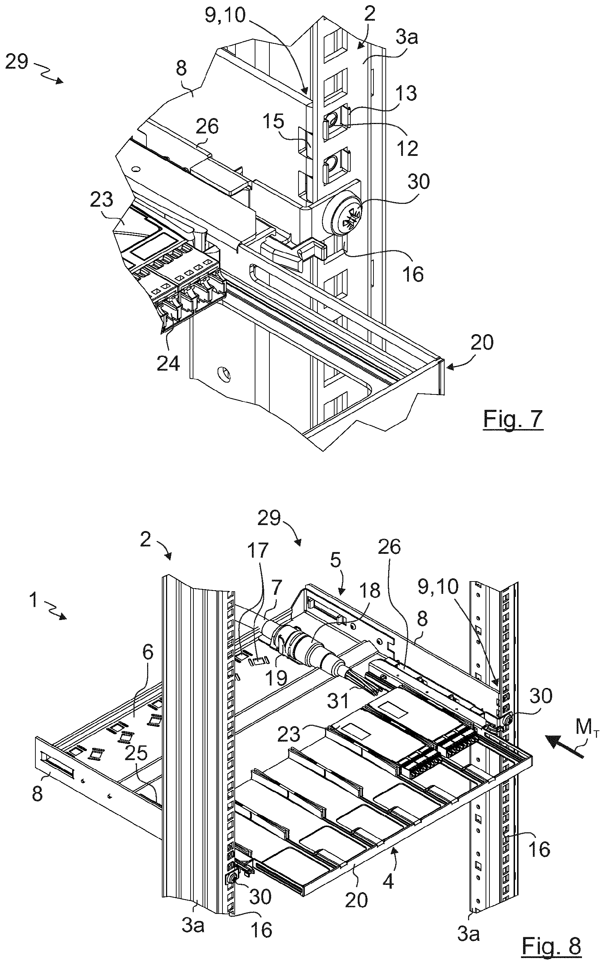

Die dargestellte Trägeranordnung 4 weist eine Trägereinheit 20 und eine Schienenanordnung 21 für die Trägereinheit 20 auf. Die Trägereinheit 20 ist in Figur 6 beispielhaft in einem vollständig ausgezogenen Zustand und in den nachfolgenden Figuren 7 und 8 in einem teilweise eingeschobenen Zustand dargestellt. In dem Ausführungsbeispiel ist die Trägereinheit 20 als Rangierfeld ausgebildet, was allerdings nicht einschränkend zu verstehen ist. Die Schienenanordnung 21 kann sich grundsätzlich zur Verwendung mit beliebigen Trägereinheiten 20 eignen, insbesondere auch zur Verwendung mit Schubfächern oder Dummy-Elementen. Anstelle einer Schienenanordnung 21 kann beispielsweise auch ein Trägergehäuse vorgesehen sein, was in den Ausführungsbeispielen allerdings nicht dargestellt ist.

Die Trägereinheit 20 weist ein vorderes Interface bzw. Anschlussfeld 22 und eine hiervon abgewandte, hintere Schnittstelle auf. Im Bereich des vorderen Anschlussfelds 22 sind mehrere Kassetten bzw. Module 23 angeordnet, die jeweils optische und/oder optisch-elektrische Steckverbinder 24 aufweisen können. Rangierfelder sind grundsätzlich bekannt und in vielen verschiedenen Varianten verfügbar, weshalb auf nähere Details vorliegend nicht eingegangen wird.

Die Schienenanordnung 21 weist eine erste Montageschiene 25 und eine separate zweite Montageschiene 26 auf. Die beiden Montageschienen 25, 26 sind voneinander beabstandet und ausgebildet, das Rangierfeld 20 gemeinsam zwischeneinander aufzunehmen. Die Schienenanordnung 21 ist ferner ausgebildet, das Rangierfeld 20 entlang und entgegen einer Einschubrichtung E bewegbar zu führen.

Jede der Montageschienen 25, 26 weist wenigstens einen Befestigungspunkt 27 zur Befestigung an dem Verteilerrahmen 2 und/oder der Kabelablagevorrichtung 5 auf. In Figur 6 ist beispielhaft eine einzelne frontseitige Vertikalstrebe 3a des Verteilerrahmens 2 mit den jeweiligen Befestigungsausnehmungen 16 strichliniert angedeutet. Die Befestigungspunkte 27 sind jeweils an einem umgebogenen, seitlichen Abschnitt (eine Fahne) der jeweiligen Montageschiene 25, 26 angeordnet und zur Schaffung einer Ausgleichsmöglichkeit für Toleranzen als Langlochbohrungen ausgeführt. Die Befestigungspunkte 27 bzw. Langlochbohrungen können schließlich fluchtend zu den gewünschten Befestigungsausnehmungen 16 des Verteilerrahmens 2 bzw. der entsprechenden frontseitigen Vertikalstrebe 3a des Verteilerrahmens 2 angeordnet werden, so dass die erste Montageschiene 25 und die zweite Montageschiene 26 vorzugsweise in dem Verteilerrahmen 2 in derselben Höhenebene H angeordnet sind.

In der Regel sind die Höhenebenen H bzw. Befestigungsausnehmungen 16 des Verteilerrahmens 2 in einem definierten Raster angeordnet und jeweils um ein Drittel einer Höheneinheit HE voneinander beabstandet. Vorzugsweise ist die Bauhöhe der ersten Montageschiene 25 und der zweiten Montageschiene 26 derart gewählt, dass diese ein Drittel einer Höheneinheit HE nicht überschreitet, so dass ein möglichst kompakter Stapel ("Register") mehrerer Trägeranordnungen 4 in dem gemeinsamen Verteilerrahmen 2 angeordnet werden kann.

Die Montageschienen 25, 26 können optional rückseitige Bewegungsbegrenzungsmittel 28 aufweisen, um die Bewegung des Rangierfelds 20 entlang der Einschubrichtung E zu begrenzen. In dem in Figur 6 dargestellten Ausführungsbeispiel handelt es sich dabei um elastische Bewegungsbegrenzungsmittel 28, wodurch der Servicetechniker beim Herausscheiben des Rangierfeldes 20 aus der Schienenanordnung 21 zusätzlich unterstützt wird.

Ergänzend zu dem Bewegungsbegrenzungsmittel 28 kann außerdem zwischen zumindest einer der beiden Montageschienen 25, 26 und einer Seitenfläche des Rangierfelds 20 eine Fixierungsanordnung ausgebildet sein, um das Rangierfeld 20 entlang oder entgegen der Einschubrichtung E in zumindest einer Auszugsposition zu fixieren. So kann beispielsweise eine Fixierung in einer teilausgezogenen Position oder in einer vollausgezogenen Position möglich sein. Auch eine Fixierung in der Betriebsposition (z. B. der vollständig geschlossenen Position) kann vorgesehen sein. Eine entsprechende Fixierungsanordnung kann vorzugsweise unter Verwendung eines federelastischen Rasthebels und einer Rastausnehmung oder eines Rücksprungs für den Rasthebel ausgebildet sein, um eine lösbare Fixierung der Auszugsposition des Rangierfelds 20 zwischen den beiden Montageschienen 25, 26 bereitzustellen.

In den Figuren 7 und 8 ist ein Trägersystem 29 aus der zuvor montierten Kabelablagevorrichtung 5 und der anschließend montierten Trägeranordnung 4 dargestellt. Figur 7 zeigt eine vergrößerte Darstellung der Befestigungstechnik.

Die Trägeranordnung 4 ist entlang einer Trägermontagerichtung M_{T} (vgl. Figur 8 oder Figur 11) in dem Verteilerrahmen 2 montierbar, wobei die Trägermontagerichtung M_{T} der Kabelablagemontagerichtung M_{K} entgegengesetzt ist und außerdem entlang der Einschubrichtung E der Trägereinheit 20 verläuft. In den Ausführungsbeispielen erfolgt die Montage der Trägeranordnung 4 von der Vorderseite der frontseitigen Vertikalstreben 3a, so dass die Fahnen der Montageschienen 25, 26 auf den frontseitigen Vertikalstreben 3a frontseitig aufliegen, wie in Figur 7 gut erkennbar. An dieser Stelle sei nochmals erwähnt, dass auch vorgesehen sein kann, die Trägeranordnung 4 ebenfalls entlang der Kabelablagemontagerichtung M_{K} in dem Verteilerrahmen 2 zu montieren. Trägeranordnung 4 und Kabelmontagevorrichtung 5 können somit ausgehend von derselben Richtung montiert werden, insbesondere von der Vorderseite des Verteilerrahmens 2.

In den Figuren 9 bis 11 ist das Befestigungsprinzip der Befestigung zwischen Kabelablagevorrichtung 5, Trägeranordnung 4 und Verteilerrahmen 2 zur besseren Verdeutlichung noch als Schnittdarstellung gezeigt.

Zunächst werden die Befestigungsklammern bzw. das Rahmenbefestigungselement 13 der Kabelablagevorrichtung 5 in einem ersten Verfahrensschritt (vgl. Figuren 9 und 10) von hinten in die Befestigungsausnehmungen 16 der frontseitigen Vertikalstrebe 3a des Verteilerrahmens 2 gedrückt, wodurch sich die Federarme zur Innenseite der Befestigungsausnehmung 16 bewegen, also zusammengedrückt werden. Sobald die Befestigungsklammer 13 ausreichend durch die Befestigungsausnehmung 16 hindurchgeschoben wurde, vermag diese wieder aufzuspringen und sich in ihre Ausgangsposition zurückzubewegen. Dabei hintergreift die Befestigungsklammer 13 die Kanten der Befestigungsausnehmungen 16 von vorne auf dem Rand der frontseitigen Vertikalstrebe 3a. Auf diese Weise ist es vorteilhaft möglich, die Kabelablagevorrichtung 5 ohne Zuhilfenahme von Werkzeugen oder sonstigen Hilfsmitteln zumindest provisorisch an dem Verteilerrahmen 2 zu befestigen.

In einem zweiten Verfahrensschritt können die Kabel 7 auf der Kabelablagevorrichtung 5 verlegt werden.

In einem dritten Verfahrensschritt kann die Trägeranordnung 4 mit deren Befestigungspunkten 27 fluchtend zu korrespondierenden Trägerbefestigungselementen 12 bzw. Gewindebohrungen der Kabelablagevorrichtung 5 ausgerichtet werden. Schließlich kann ein separates Trägerbefestigungsgegenelement 30, in den Ausführungsbeispielen ein Schraubenelement (beispielsweise mit einem Normgewinde M5), durch das Langloch bzw. den Befestigungspunkt 27 der Trägeranordnung 4 und die Befestigungsausnehmung 16 der frontseitigen Vertikalstrebe 3a des Verteilerrahmens 2 hindurchgeführt und in der Gewindebohrung des Montageabschnitts 10 verschraubt werden. Die Befestigungsklammern 13 weichen mit zunehmendem Druck des Schraubenkopfes in Richtung der Innenseite der Befestigungsausnehmungen 16 aus, bis ihre Verrastung aus der Befestigungsausnehmung 16 vollständig gelöst ist (vgl. Figur 11). Die Fixierung der Kabelablagevorrichtung 5 über besagte Befestigungsklammer 13 wird somit durch die Schraubverbindung abgelöst. Dadurch, dass die Befestigungsklammer 13 zur Innenseite der Befestigungsausnehmung 16 des Verteilerrahmens 2 umklappt, findet ein direkter Andruck der Trägeranordnung 4 an die frontseitigen Vertikalstreben 3a des Verteilerrahmens 2 statt, wodurch sich die mechanische Stabilität der Trägeranordnung 4 bei einer nachfolgenden Bestückung mit faseroptischer Verteilertechnik (z. B. die dargestellten Module 23) erhöht.

Auf die beschriebene Weise kann jeweils einer Kabelablagevorrichtung 5 eine oder mehrere Trägeranordnungen 4 zugeordnet werden. Es kann beispielsweise ein Stapel aus zwei, drei, vier oder noch mehr Trägeranordnungen 4 einer gemeinsamen Kabelablagevorrichtung 5 zugeordnet werden. Auch eine 1:1 Zuordnung ist allerdings möglich.

Nach der Montage der Trägeranordnung 4 kann der Servicetechniker unmittelbar die einzelnen faseroptischen Leitungen 31 ("Peitschen"), die aus dem Kabelkopf 18 austreten (vgl. Figuren 5 und 8), mit den rückseitigen Schnittstellen der Module 23 der Trägereinheit 20 verbinden.

Die Demontage des faseroptischen Verteilersystems 1 kann durch Lösen der Schraubverbindung und anschließendes Entnehmen der Trägeranordnung 4 erfolgen, wobei in Folge bedarfsweise auch die Verrastung der Kabelablagevorrichtung 5 gelöst werden kann.

Um die Verrastung der Kabelablagevorrichtung 5 zu lösen, können grundsätzlich dieselben bekannten Werkzeuge zum Einsatz kommen, die auch zum Entriegeln von Käfigmuttern bekannt sind, wobei - je nach Anzahl der Befestigungspaare 11 - auch ein Spezialwerkzeug vorgesehen sein kann, um mehrere Befestigungsklammern 13 gleichzeitig zu entriegeln. Optional kann vorgesehen, dass das Entriegelungswerkzeug im Auslieferzustand der Kabelablagevorrichtung 5 verliersicher mit der Kabelablagevorrichtung 5 verbunden ist, beispielsweise verrastet ist. Das Entriegelungswerkzeug kann gegebenenfalls auch mehrere Funktionen im Rahmen des faseroptischen Verteilersystems 1 erfüllen. Das Entriegelungswerkzeug kann beispielsweise gleichzeitig als Rastelement 19 für ein Kabel 7 oder einen Kabelkopf 18 dienen und/oder in einer mechanischen Aufnahmeschnittstelle 17 des Kabelablageabschnitts 6 verliersicher aufgenommen sein.

## Patentansprüche

1. Kabelablagevorrichtung (5) zur Ablage, Befestigung und/oder Führung von Kabeln (7) eines faseroptischen Verteilersystems (1), zur Verwendung mit einer separaten Trägeranordnung (4) für eine faseroptische Komponente, aufweisend einen Kabelablageabschnitt (6) und zwei an verschiedenen Seiten des Kabelablageabschnittes (6) angeordnete Montageabschnitte (10) zur Befestigung an einem separaten faseroptischen Verteilerrahmen (2).

2. Kabelablagevorrichtung (5) nach Anspruch 1,
**dadurch gekennzeichnet, dass**
der Kabelablageabschnitt (6) wenigstens eine mechanische Aufnahmeschnittstelle (17) für wenigstens eines der Kabel (7) und/oder für wenigstens einen Kabelkopf (18) eines der Kabel (7) aufweist.

3. Kabelablagevorrichtung (5) nach Anspruch 1 oder 2,
**dadurch gekennzeichnet, dass**
die Kabelablagevorrichtung (5) mittels der Montageabschnitte (10) an der Trägeranordnung (4) befestigbar ist.

4. Kabelablagevorrichtung (5) nach einem der Ansprüche 1 bis 3,
**dadurch gekennzeichnet, dass**
die Kabelablagevorrichtung (5) einzig unter Verwendung der Montageabschnitte (10) an dem Verteilerrahmen (2) befestigbar ist.

5. Kabelablagevorrichtung (5) nach einem der Ansprüche 1 bis 4,
**gekennzeichnet durch**
zwei Montageschenkel (8), die sich an zwei gegenüberliegenden Seiten des Kabelablageabschnitts (6) jeweils ausgehend von dem Kabelablageabschnitt (6) entlang oder entgegen einer Kabelablagemontagerichtung (M_{K}) erstrecken, wobei an einem kabelablageabschnittsfernen Endabschnitt (9) der Montageschenkel (8) jeweils einer der Montageabschnitte (10) angeordnet ist.

6. Kabelablagevorrichtung (5) nach einem der Ansprüche 1 bis 5,
**dadurch gekennzeichnet, dass**
die Montageabschnitte (10) jeweils wenigstens ein Befestigungspaar (11) aufweisen, umfassend ein Trägerbefestigungselement (12) zur Verbindung mit der Trägeranordnung (4), das vorzugsweise als Gewindebohrung ausgebildet ist, und ein Rahmenbefestigungselement (13) zur Verbindung mit dem Verteilerrahmen (2), das vorzugsweise als Befestigungsklammer ausgebildet ist.

7. Kabelablagevorrichtung (5) nach Anspruch 6,
**dadurch gekennzeichnet, dass**
zumindest eines der Rahmenbefestigungselemente (13) eines der Befestigungspaare (11), vorzugsweise alle Rahmenbefestigungselemente (13) aller Befestigungspaare (11) gemeinsam, als separates Befestigungsteil (14) ausgebildet ist bzw. sind, wobei das separate Befestigungsteil (14) an dem Montageabschnitt (10) befestigt ist, vorzugsweise mittels Rastlaschen (15) verrastet ist.

8. Kabelablagevorrichtung (5) nach Anspruch 6 oder 7,
**dadurch gekennzeichnet, dass**
die Montageabschnitte (10) jeweils wenigstens zwei Befestigungspaare (11) aufweisen, vorzugsweise jeweils wenigstens drei Befestigungspaare (11) aufweisen, wobei die Befestigungspaare (11) desselben Montageabschnittes (10) quer zu einer Kabelablagemontagerichtung (M_{K}) zueinander angeordnet und in ganzzahligen Vielfachen eines Drittels einer Höheneinheit (HE) voneinander beabstandet sind.

9. Trägersystem (29), aufweisend eine Kabelablagevorrichtung (5) gemäß einem der Ansprüche 1 bis 8 und wenigstens eine Trägeranordnung (4), wobei die Trägeranordnung (4), insbesondere ein Trägergehäuse oder gegenüberliegende Montageschienen (25, 26) einer Trägereinheit (20), Befestigungspunkte (27) zur Befestigung an den Montageabschnitten (10) der Kabelablagevorrichtung (5) aufweist.

10. Trägersystem (29) nach Anspruch 9 mit einer Kabelablagevorrichtung (5) nach einem der Ansprüche 6 bis 8,
**dadurch gekennzeichnet, dass**
die Befestigungspunkte (27) als jeweilige Ausnehmungen in seitlichen Fahnen des Trägergehäuses oder der Montageschienen (25, 26) ausgebildet sind, so dass jeweilige separate Trägerbefestigungsgegenelemente (30), vorzugsweise Schraubenelemente, mit den korrespondierenden Trägerbefestigungselementen (12) der Montageabschnitte (10) durch besagte Ausnehmungen hindurch verbindbar sind.

11. Faseroptisches Verteilersystem (1), aufweisend wenigstens eine Kabelablagevorrichtung (5) gemäß einem der Ansprüche 1 bis 8 und den faseroptischen Verteilerrahmen (2), wobei der Verteilerrahmen (2) zumindest zwei Montagestreben (3a, 3b) zur Befestigung mehrerer Trägeranordnungen (4) aufweist, vorzugsweise zwei frontseitige Vertikalstreben (3a) zur Befestigung der Trägeranordnungen (4) in verschiedenen Höhenebenen (H).

12. Faseroptisches Verteilersystem (1) nach Anspruch 11,
**dadurch gekennzeichnet, dass**
die wenigstens eine Trägeranordnung (4) entlang einer Trägermontagerichtung (M_{T}) und die wenigstens eine Kabelablagevorrichtung (5) entlang einer hierzu entgegengerichteten Kabelablagemontagerichtung (M_{K}) in dem Verteilerrahmen (2) an denselben Montagestreben (3a, 3b) montierbar sind.

13. Faseroptisches Verteilersystem (1) nach Anspruch 11 oder 12 und einem der Ansprüche 6 bis 8,
**dadurch gekennzeichnet, dass**
die Montagestreben (3a, 3b) des Verteilerrahmens (2) Rahmenbefestigungsgegenelemente (16) zur unmittelbaren Verbindung mit den Rahmenbefestigungselementen (13) der Montageabschnitte (10) der Kabelablagevorrichtung (5) aufweisen, vorzugsweise von den Befestigungsklammern (13) hintergreifbare Befestigungsausnehmungen (16).

14. Verfahren zur Montage eines faseroptischen Verteilersystems (1), aufweisend zumindest die folgenden Verfahrensschritte:
- Bereitstellen und Befestigen einer Kabelablagevorrichtung (5) an einem faseroptischen Verteilerrahmen (2) mittels zweier, an verschiedenen Seiten eines Kabelablageabschnitts (6) angeordneter Montageabschnitte (10) der Kabelablagevorrichtung (5);
- Ablegen, Befestigen und/oder Führen von Kabeln (7) des faseroptischen Verteilersystems (1) auf dem Kabelablageabschnitt (6) der in dem Verteilerrahmen (2) zuvor befestigten Kabelablagevorrichtung (5); und
- Bereitstellen und Befestigen einer Trägeranordnung (4) für eine faseroptische Komponente in dem Verteilerrahmen (2) zur Verwendung mit der zuvor montierten Kabelablagevorrichtung (5).

15. Verfahren nach Anspruch 14,
**dadurch gekennzeichnet, dass**
die Montageabschnitte (10) der Kabelablagevorrichtung (5) zur Befestigung der Kabelablagevorrichtung (5) an dem Verteilerrahmen (2) und außerdem zur Befestigung der Kabelablagevorrichtung (5) an der Trägeranordnung (4) verwendet werden.
